# EUROPEAN PATENT SPECIFICATION

(11) **EP 3 742 574 B1**
(45) Date of publication and mention of the grant of the patent: **18.05.2022**
(21) Application number: 20183294.6
(22) Date of filing: 25.05.2018
(51) Int. Cl.: H02J 7/00

(54) **METHOD AND DEVICE FOR IDENTIFYING MASTER AND SLAVE BATTERY PACKS**
VERFAHREN UND VORRICHTUNG ZUR IDENTIFIZIERUNG VON MASTER- UND SLAVE-BATTERIEPACKS
PROCÉDÉ ET DISPOSITIF POUR IDENTIFIER DES BLOCS BATTERIE MAÎTRES ET ESCLAVES

(30) Priority: 26.05.2017 CN 201710385335; 24.05.2018 US 201815988254
(43) Date of publication of application: 25.11.2020
(62) Divisional of application: 18275071.1
(73) Proprietor: Contemporary Amperex Technology Co., Limited, Jiaocheng District Ningde City Fujian 352100 (CN)
(72) Inventor: WEI, Zhili, Ningde City, Fujian 352100 (CN)
(74) Representative: Williams Powell

(56) References cited:
- GB-A- 2 494 187
- US-A1- 2016 359 329

## Description

### CROSS-REFERENCE TO RELATED APPLICATION(S)

This application claims the benefit of Chinese Patent Application No. CN201710385335.3, entitled "METHOD AND DEVICE FOR IDENTIFYING MASTER AND SLAVE BATTERY PACKS " and filed on May 26, 2017 in the State Intellectual Property Office of the People's Republic of China (PRC) (SIPO), and U.S. Patent Application No. 15/988,254, entitled "METHOD AND DEVICE FOR IDENTIFYING MASTER AND SLAVE BATTERY PACKS" and filed on May 24, 2018.

### BACKGROUND

### Field

The present invention relates to the technical field of energy storage system, and in particular to a method and device for identifying master and slave battery packs.

### Background

Energy storage technology with lithium ion batteries is rapidly evolving. Lithium energy storage applications range from small, portable, personal energy storages (such as a mobile phone's auxiliary back-up power supplies), to mid-sized home energy storages used to store the green energies generated by windmills or solar panels, to large-scale enterprise or public-level energy storages used for various applications.

Large-capacity lithium ion battery energy storage systems typically employ a plurality of independent battery cabinets that are connected in series or in parallel. When the plurality of independent battery cabinets are connected in parallel, a battery pack may be connected to each of the battery cabinets. When the battery cabinets are in operation, a master battery pack may be used to coordinate the operations of the plurality of battery packs, as well as to communicate information with exterior systems.

GB 2,494,187 A (PAG LTD) discloses a battery management system which controls the operation of plural electric batteries coupled to one another and includes a master control unit coupled to each battery, a unit to provide a measure of the power draw required from the batteries and a unit to provide data relating to the status of each battery. The master control unit activates a number of the batteries to meet the power draw required from the batteries and de-activates any batteries which would cause the number of batteries to exceed the required power draw. Each battery can include a control unit that is settable as a slave unit or a master control unit and a connection element that signals a sequential connection of the battery to another battery. One control unit can be set as a master and the others as slaves, on the basis of the battery coupling sequence, detected by a link terminal being connected to status terminal of another battery. A unique identifier can be assigned to each battery indicating its position in the sequence. The number of active batteries can be controlled so that their combined power capacity does not exceed the maximum safe power to a device coupled to the batteries. Batteries can be activated or deactivated over time and on the basis of their state of charge and temperature and set in either a discharge or a charge mode to charge batteries connected together. The system allows a large number of batteries to be connected together in a stack whose total power capacity exceeds the safe maximum power of a battery-powered device such as a camera.

US2016359329 A1 discloses a method for identifying a new master battery pack where the packs are enumerated as ID and their ID is sorted. The device with lowest ID becomes master.

### SUMMARY

One or more embodiments of the present application provide a method and device for identifying master and slave battery packs. A battery cabinet is able to determine the master battery pack and slave battery packs by itself, thereby improving the configuration of the master battery pack and slave battery packs in the battery cabinet.

One or more embodiments of the present application provide a method for identifying a master battery pack. According to an aspect of the invention, the method includes: detecting, by a first battery pack, that a master battery pack is removed from a battery cabinet of a power cabinet; detecting, by the first battery pack, that a new battery pack is not connected to the battery cabinet within a time period after the master battery pack is removed, wherein the time period indicates a longest time that the power cabinet continues to operate in its current configuration after the master battery pack is removed; and, identifying, by the first battery pack, the new master battery pack and new slave battery packs according to a sorted result of battery pack identifiers when the new battery pack is not connected to the battery cabinet within the time period.

One or more embodiments of the present invention further provide a device for identifying a master battery pack. According to an aspect of the invention, the device is arranged in a first battery pack and includes an identifying module configured to: detect that a master battery pack is removed from a battery cabinet of a power cabinet; detect that a new battery pack is not connected to the battery cabinet within a time period after the master battery pack is removed, wherein the time period indicates a longest time that the power cabinet continues to operate in its current configuration after the master battery pack is removed; and, identify a new master battery pack and new slave battery packs according to a sorted result of battery pack identifiers when the new battery pack is not connected to the battery cabinet within the time period.

Embodiments of the present application provide a method and device for identifying a master battery pack and slave battery packs. According to the technical solution provided in the embodiments of the present application, each of the battery packs connected to their respective battery cabinet is able to automatically identify a master battery pack and slave battery packs according to the identifiers of the battery packs. The solution does not require a user to manually configure the battery packs one by one. Thus, the complexity of the operation is reduced, and the efficiency of configuration is improved. In this way, embodiments of the present application solve the shortcomings in the existing technology of requiring a user to manually configure battery packs one by one, thereby avoiding the complicated and time-consuming configuration process and the resulting low configuration efficiency.

### BRIEF DESCRIPTION OF THE DRAWINGS

In order to more clearly describe the technical solutions of the one or more embodiments of the present applications, the drawings for the one or more embodiments will be briefly described below. It is understood that the drawings accompanied by the detailed description set forth below represent only some embodiments of the present application. A person of ordinary skill in the art may readily derive other drawings on the basis of these drawings without inventive skills and these drawings would still be encompassed within the scope of the disclosure of the present application.
Figure 1 is an exemplary flow chart of a first method for identifying a master battery pack and slave battery packs provided by one or more embodiments of the present application.
Figure 2 is a schematic view of the structure of the battery cabinet provided by one or more embodiments of the present application.
Figure 3 is an exemplary flow chart of a second method for identifying a master battery pack and slave battery packs provided by one or more embodiments of the present invention.
Figure 4 is a functional block diagram of a system for identifying a master battery pack and slave battery packs provided by one or more embodiments of the present invention.

### DETAILED DESCRIPTION

In order to allow a better understanding of the technical solutions of the present application, various embodiments of the present application will be described in detail below with reference to the accompanying drawings. It should be understood that the embodiments described herein represent only some embodiments of the present application and that the innovative aspects of the present application may be embodied in many different forms. Other embodiments may be readily apparent to a person of ordinary skill in the art on the basis of the embodiments described herein without the need to exercise inventive skills and all these embodiments would still fall within the scope of the present application.

The terms used in the one or more embodiments of the present application are provided for the purpose of illustrating the embodiments only and are not intended to limit the present application. For example, the singular forms "a," "an," and "this," and others used in the one or more embodiments of the present application and the appended claims are intended to include the plural forms unless the context clearly dictates otherwise.

In existing technology, the determination of the master battery pack and the slave battery packs in a battery cabinet may require a user to manually configure them one by one. The operation is complicated and time-consuming. In addition, the configuration efficiency is relatively low. Embodiments of the present application provide a method and a system for configuring a master battery pack and slave battery packs automatically.

### Embodiment I

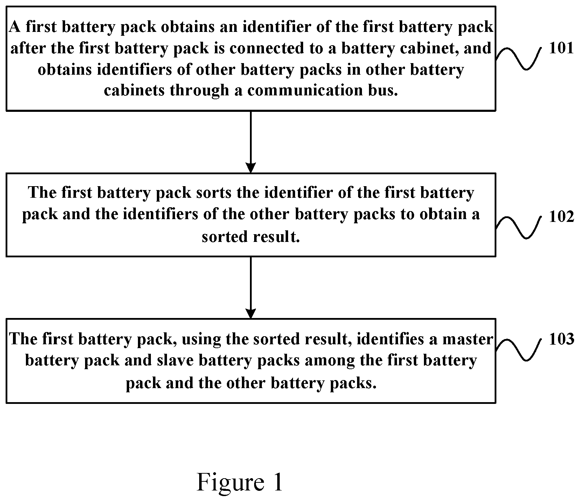

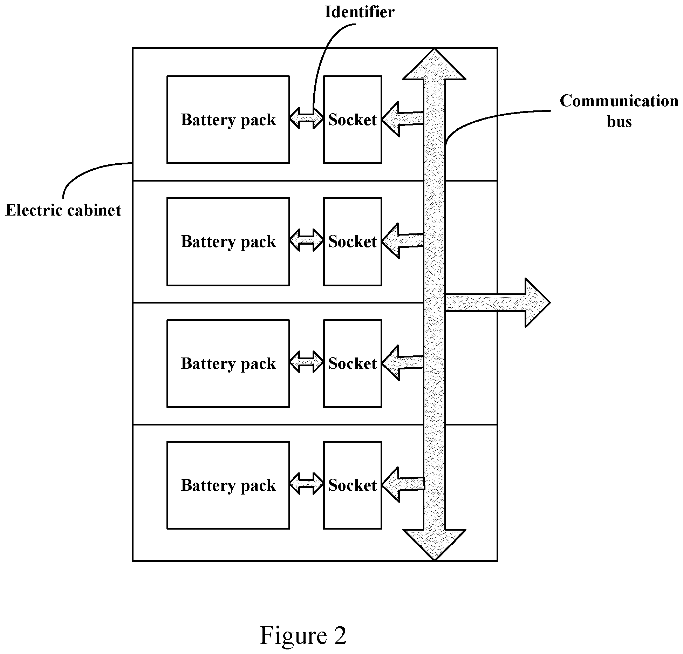

Figure 1 is an exemplary flow chart of a first method for identifying a master battery pack and slave battery packs provided by one or more embodiments of the present application. Figure 2 is a schematic view of the structure of the battery cabinet provided by one or more embodiments of the present application. As shown in Figures 1 and 2, the method for identifying the master battery pack and slave battery packs in accordance with the embodiments includes the steps or blocks described herein.

In block 101, a first battery pack obtains an identifier of the first battery pack after the first battery pack is connected to a battery cabinet. The first battery pack may receive identifiers of other battery packs in other battery cabinet through a communication bus. In one or more embodiments of the present application, the number of the other battery packs is N, and N is a positive integer.

As shown in Figure 2, in one or more embodiment of the present application, each battery cabinet has a socket or an interface through which the battery pack is connected to the battery cabinet. The battery cabinet is also provided with a communication bus used for communicating with other battery cabinets, as well as for communicating with systems outside of the battery cabinet.

In one or more embodiments of the present application, each battery cabinet may be populated by connecting to a battery pack or may be unpopulated by not connecting to a battery pack. The socket or the interface in each battery cabinet may be configured with an identifier. The identifier may be provided through an address line in the socket or the interface, and the identifier may be obtained by the battery pack. It is understood that the number of identifiers may vary with the number of battery cabinets.

Through the communication bus, each battery cabinet may broadcast a message when it has been connected with a battery pack and may receive broadcast messages from other battery cabinets to learn if each battery cabinet has been connected with a battery pack. In one or more embodiments of the present application, a first battery pack may refer to any battery pack connected to a battery cabinet, and correspondingly, other battery packs may refer to any other battery packs connected to the other battery cabinets except the first battery pack.

For example, a power cabinet may provide four battery cabinets, and each battery cabinet may be connected with a battery pack. In such case, one of the battery packs may be referred to as the first battery pack, and the remaining three battery packs may be referred to as the other battery packs.

After the first battery pack is connected to a battery cabinet, the first battery pack may use an address provided by the address lines in the socket as its own identifier. The first battery pack may broadcast its identifier via the communication bus to the other battery packs. Correspondingly, after each of the other battery packs is connected to its respective battery cabinet, each of the other battery packs may use the address provided by the address lines in the respective socket as its own identifier. Each of the other battery packs may broadcast its identifier via the communications bus to the first battery pack and all other battery packs. It is understood that each battery pack in the power cabinet may know each other's identifiers.

In one aspect, the identifier of the first battery pack and the identifiers of each of the other battery packs are unique addresses. In another aspect, the identifier of the first battery pack and the identifiers of each of the other battery packs are unique serial numbers. For example, the addresses may be 0X00, 0X01, etc., or A01, A02, etc. The serial numbers may be No. 1, No. 2, etc.

For example, four battery cabinets may be provided in a power cabinet, and the addresses of the battery cabinets may be 0X00, 0X01, 0X02 and 0X03, respectively. In such case, the identifier of the battery pack connected to the battery cabinet with address 0X00 is 0X00, and the identifier of the battery pack connected to the battery cabinet with address 0X01 is 0X01, and so on.

In another embodiment, a power cabinet may be provided with eight battery cabinets. The serial numbers of the battery cabinets may be from No. 1 to No. 8. In such case, the identifier of the battery pack connected to the battery cabinet with serial No. 1 is No. 1, the identifier of the battery pack connected to the battery cabinet with serial No. 2 is No. 2, and so on.

In block 102, the first battery pack sorts the identifier of the first battery pack and the identifiers of each of the other battery packs, and obtains a sorted result. For example, after obtaining its own identifier, as well as the identifiers of each of the other battery packs via the communication bus, the first battery pack sorts the identifiers according to a preset sorting rule to obtain a corresponding sorted result. In one aspect, the first battery pack may sort the identifiers according to an ascending order of the identifiers. In another aspect, the first battery pack may sort the identifiers according to a descending order of the identifiers.

It is understood that while only two sorted results of the identifiers are described in one or more embodiments of the present application, other sorted results may be obtained in accordance with the requirements of different power cabinets. Therefore, the sorting rules are not limited to those for obtaining the two sorted results provided in the embodiments of the present application.

In an aspect, the first battery pack may put its own identifier first in the sorted result to represent itself, and then put the sorted result obtained from applying the sorting rule to the identifier of the first battery pack and the identifiers of all the other battery packs next. Correspondingly, each of the other battery packs, in the sorting step, may put its own identifier first in the sorted result to represent itself, and then put the sorted result obtained from applying the sorting rule to the identifier of the first battery pack and the identifiers of all the other battery packs after its own identifier.

For example, there may be four battery cabinets provided in a power cabinet. The addresses of the four battery cabinets may be 0X00, 0X01, 0X02, and 0X03 in sequence. The first battery pack may be connected to the battery cabinet whose address is 0X00, and the other three battery packs may be connected to the battery cabinets with the addresses 0X01, 0X02, 0X03. In addition, the identifiers may be sorted according to an ascending order of the identifiers. In such case, the sorted result of the first battery pack may be 0X00 -- 0X00, 0X01, 0X02, 0X03, and the sorted result of the battery pack in the battery cabinet with the address 0X01 may be 0X01 -- 0X00, 0X01, 0X02 and 0X03, and so on.

In block 103, The first battery pack, using the sorted result, identifies a master battery pack and slave battery packs among the first battery pack and the other battery packs. For example, the first battery pack may, using the sorted result and in accordance with a designated identification rule, identify a master battery pack and slave battery packs among the first battery pack and the other battery packs. In one aspect of the identification rule, the first battery pack, using the sorted result, may identify the battery pack with the largest identifier as a master battery pack, and each of the other battery packs as a slave battery pack. In another aspect, the first battery pack, using the sorted result, may identify the battery pack with the smallest identifier as a master battery pack, and each of the other battery packs as a slave battery pack.

It is understood that while only two identification rules have been described in one or more embodiments of the present application, other identification rules may be adopted in accordance with the requirements of different power cabinets. Therefore, the identification rules are not limited to the two identification rules provided in the embodiments of the present application.

In one aspect, the first battery pack may compare its own identifier with the identifier of the master battery pack identified from the sorted result. If the identifier of the first battery pack is the same as that of the master battery pack, the first battery package is the master battery pack. Correspondingly, one of the other battery packs may compare its own identifier with the identifiers of the one or more slave battery packs identified from the sorted result. If the identifier of one of the other battery packs is the same as that of one of the slave battery packs, such one of the other battery pack is the slave battery pack.

For example, there may be four battery cabinets provided in a power cabinet. The addresses of the battery cabinet may be 0X00, 0X01, 0X02, and 0X03 in sequence. The first battery pack may be connected to the battery cabinet whose address is 0X00, and the other three battery packs may be connected to the battery cabinets with the addresses 0X01, 0X02, and 0X03, in that order. The sorting rule may sort the identifiers of the battery packs according to an ascending order of the identifiers, and the identification rule may select the battery pack with the smallest identifier as the master battery pack. In such case, the sorted result in the first battery pack may be 0X00 -- 0X00, 0X01, 0X02, and 0X03. Since the identifier of the first battery pack is the smallest, the identification rule may determine that the first battery pack is the master battery pack. In addition, the sorted result of the other battery pack in the battery pack cabinet with the address 0X01 may be 0X01-- 0X00, 0X01, 0X02, 0X03. Accordingly, the identification rule may determine that such other battery pack is a slave battery pack, and so on.

In one or more embodiment of the present application, once one battery pack is identified as the master battery pack, all other battery packs are identified as the slave battery packs. In another embodiment of the present application, after one battery pack is identified as the master battery pack, when a new battery pack is added, the new battery pack may be identified as a slave battery pack.

In one or more embodiments of the present application, the master battery pack may control the operation of the slave battery packs, as well as communicate with one or more external systems via the communication bus. In one embodiment, if only one battery pack is connected to a power cabinet, after the battery pack obtains its identifier and if/when the battery pack does not receive the identifier of another battery pack via the communication bus, the first battery pack may identify itself as the master battery pack and accordingly may operate independently. In one aspect, the identifier of the first battery pack and the identifiers of each of the other battery packs are each a unique address. In another aspect, the identifier of the first battery pack and the identifiers of each of the other battery packs are each a unique serial number.

In one or more embodiments of the present application, a device may be configured to execute the blocks 101 to 103 to identify a master battery pack and the slave battery packs. The device may be located in the battery pack. In other embodiments of the present application, the device may be located in the battery cabinet, in the power cabinet, or may be external to the power cabinet and may communicate with the battery cabinets through the communication bus.

Embodiments of the present application provide a method for identifying a master and slave battery packs. After a first battery pack is connected to a battery cabinet, the first battery pack may obtain its own identifier. When the first battery pack receives identifiers of the other battery packs connected to the other battery cabinets through a communication bus, the first battery pack may sort the identifiers of all the battery packs. The first battery may, using the sorted result of the identifiers of all the battery packs, identify a master battery pack and the slave battery packs among the first battery pack and the other battery packs. In one aspect, if/when the first battery pack does not receive the identifiers of any other battery packs from the other battery cabinets through the communication bus, the first battery pack may identify itself as the master battery pack. According to the technical solution provided in the embodiments of the present application, each of the battery packs connected to their respective battery cabinets is able to, according to the respective identifiers of the battery packs, automatically identify a master battery pack and one or more slave battery packs. Because a user is not required to manually configure the battery packs one by one, the complexity of the operation is reduced, and the configuration efficiency is improved. In this way, embodiments of the present application solve the shortcoming associated with the existing technology that requires a user to manually configure the battery packs one by one, thereby avoiding the complicated and time-consuming configuration process and the resulting low configuration efficiency.

### Embodiment II

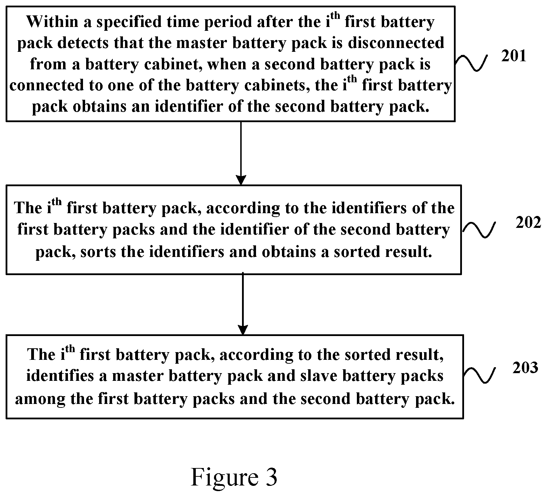

Figure 3 is an exemplary flow chart of a second method for identifying a master battery pack and slave battery packs provided by one or more embodiments of the present application. As shown in Figures 2 and 3, the method for identifying the master battery pack and the slave battery packs includes the steps or blocks described herein. In Figure 3, the plurality of battery packs in the power cabinet are referred to as the first battery packs. An i^{th} battery pack of the plurality of battery packs is referred to as the i^{th} first battery pack.

In block 201, within a specified time period after the i^{th} first battery pack detects that the master battery pack is disconnected from a battery cabinet, if/when a second battery pack is connected to one of the battery cabinets, the i^{th} first battery pack obtains an identifier of the second battery pack. In one aspect, the second battery pack may be connected to the same or a different battery cabinet from which the master battery pack was disconnected.

During operation of the power cabinet, the battery cabinets in a power cabinet may be reconfigured to meet changing demands. For example, it may be desirable to increase or to decrease the number of battery cabinets. In another example, when a battery pack connected to one of the battery cabinets in the power cabinet fails, the failed battery pack may need to be removed from the battery cabinet.

Therefore, in one or more embodiments of the present application, when a battery pack needs to be removed from the battery cabinet, the battery pack may send a broadcast message through the communication bus to notify all the other battery packs that the battery pack will be removed from the battery cabinet. The battery pack to be removed may be any one of the battery packs, for example, a j^{th} battery pack of the first battery packs, where j ranges from 1 to N, where N is a positive integer and N refers to the total number of battery packs in the power cabinet.

When a battery pack such as the master battery pack is removed from a power cabinet, in order to maintain the operation of the power cabinet, a new master battery pack may need to be identified to control the operation of the entire power cabinet. Therefore, in one or more embodiments of the present application, a specified time period may be set to indicate the longest time that the power cabinet may continue to operate in its current configuration. If no new battery pack is added within the specified time period, the power cabinet or the battery cabinets may select one battery pack among all of the battery packs currently in the power cabinet to be the new master battery pack.

If a new battery pack (e.g., the second battery pack) is added within the specified time period, and after the newly added second battery pack is connected to the battery cabinet, the second battery pack may obtain its own identifier. The second battery pack may broadcast a message through the communication bus to inform the other battery packs of its own identifier. For example, each of the first battery packs, including the i^{th} first battery pack, may obtain the identifier of the second battery pack via the communication bus. In one aspect, the identifiers of the first battery packs and the identifier of the second battery pack are each a unique address code. In another aspect, the identifiers of the first battery packs and the identifier of the second battery pack are each a unique serial number. For a detailed description or explanation of the identifiers of the battery packs, references may be made to the description accompanying block 101 in Embodiment I, and the details of which will not be repeated herein.

For example, if there are six battery cabinets in a power cabinet, the addresses of these battery cabinets may be 0X00, 0X01, 0X02, 0X03, 0X04, and 0X05. Each of the addresses may be used to identify a battery pack. In this example, the specified time period, which indicates the longest time period that the power cabinet may continue to operate in the current configuration after the master battery pack is removed, may be set to 10 seconds. In this case, 5 seconds after the battery pack identified by address 0X00 is removed from the battery cabinet, a new battery pack may be connected to the battery cabinet with the address 0X00. The new battery pack may send a broadcast message to the other battery packs through the communication bus to inform them of its address code.

In block 202, the i^{th} first battery pack, according to the identifiers of the first battery packs and the identifier of the newly added second battery pack, sorts the identifiers and obtains a sorted result. For a detailed description of how the i^{th} first battery pack may sort the identifiers in block 202, references may be made to the description accompanying block 102 in Embodiment I, and the details of which will not be repeated herein.

In block 203, the i^{th} first battery pack, according to the sorted result, identifies a master battery pack and slave battery packs among the first battery packs and the second battery pack. For a detailed description of how the i^{th} first battery pack may identify a master battery pack and slave battery packs in block 203, references may be made to the description accompanying step 103 in Embodiment I, and the details of which will not be repeated herein. In one embodiment of the present application, in the situation where a new second battery pack is not added to the power cabinet within the specified time period in block 201, the i^{th} first battery pack may identify a new master battery pack and new slave battery packs according to the last sorted result.

In one aspect, the i^{th} first battery pack in block 203, according to the last sorted result, may select the battery pack with the largest identifier as the master battery pack, and each of the other battery packs as the slave battery packs. In one aspect, the i^{th} first battery pack, according to the last sorted result, may select the battery pack with the smallest identifier as the master battery pack, and each of the other battery packs as the slave battery packs.

In one or more embodiments of the present application, it is understood that the last sorted result of the identifiers was determined by the last designated sorting rule. For example, suppose the last designated sorting rule was for the first i^{th} battery pack to sort the identifiers according to an ascending order of the identifiers, and to select the battery pack with the largest identifier as the master battery pack, and to select the other battery packs as the slave battery packs. When the master battery pack is removed, the i^{th} battery pack may identify a new master battery pack and new slave battery packs using the last designated sorting rule by selecting the battery pack with the largest identifier, excluding the removed master battery pack, as the new master battery pack, and selecting the other battery packs as the new slave battery packs.

In another example, suppose the last designated sorting rule was for the i^{th} first battery pack to sort the identifiers according to a descending order of the identifiers, and to select the battery pack with the largest identifier as the master battery pack, and to select the other battery packs as the slave battery packs. When the master battery pack is removed, the i^{th} battery pack may identify the new master battery pack and new slave battery packs using the last designated sorting rule by selecting the battery pack with the largest identifier, excluding the removed master battery pack, as the new master battery pack, and selecting the other battery packs as the new slave battery packs.

In another example, suppose the last designated sorting rule was for the i^{th} first battery pack to sort the identifiers according to an ascending order of the identifiers, and to select the battery pack with the smallest identifier as the master battery pack, and to select the other battery packs as the slave battery packs. When the master battery pack is removed, the i^{th} battery pack may identify the new master battery pack and new slave battery packs using the last designated sorting rule by selecting the battery pack with the smallest identifier, excluding the removed master battery pack, as the new master battery pack, and selecting the other battery packs as the new slave battery packs.

In another example, suppose the last designated sorting rule was for the i^{th} first battery pack to sort the identifiers according to a descending order of the identifiers, and to select the battery pack with the smallest identifier as the master battery pack, and to select the other battery packs as the slave battery packs. When the master battery pack is removed, the i^{th} battery pack may identify the new master battery pack and new slave battery packs using the last designated sorting rule by selecting the battery pack with the smallest identifier, excluding the removed master battery pack, as the new master battery pack, and selecting the other battery packs as the new slave battery packs.

For example, if there are six battery cabinets in a power cabinet, the addresses of these battery cabinets may be 0X00, 0X01, 0X02, 0X03, 0X04, and 0X05. Each of the addresses may be used to identify a battery pack. In this example, according to an ascending order of the identifiers, the master battery pack is the battery pack identified by the address of 0X00. The specified time period, which indicates the longest time period that the power cabinet may continue to operate in the current configuration after the master battery pack is removed, may be set to 10 seconds. In this case, after the master battery pack identified by the address 0X00 is removed from the battery cabinet, no new battery pack is connected to the battery cabinet with the address 0X00. Accordingly, 10 seconds after the removal of the master battery pack, the battery pack identified by the address 0X01 will be selected as the new master battery pack, and the other battery packs selected as the slave battery packs.

Embodiments of the present application provide a method for identifying a master and slave battery packs. After a first battery pack (e.g., the i^{th} first battery pack) in the power cabinet detects that the master battery pack is removed from the battery cabinet, the first battery pack may determine whether a new battery pack (e.g., the second battery pack) is connected to the battery cabinet within a specified time period. When a new battery pack is connected to the battery cabinet within the specified time period, the first battery pack may sort the identifiers of all battery packs including the new battery pack, and may identify a new master battery pack and new slave battery packs according to the sorted result. When no new battery pack is connected to the battery cabinet within the specified time period, the first battery pack may identify the new master battery pack and the new slave battery packs according to the last sorted result of the identifiers. According to the technical solution provided in the embodiments of the present application, each of the battery packs connected to their respective battery cabinet is able to automatically identify a master and one or more slave battery packs according to the identifiers of the battery packs. The method disclosed does not require a user to manually configure the battery packs one by one. Thus, the complexity of the operation is reduced, and the efficiency of configuration is improved. In this way, embodiments of the present application solve the shortcomings in the existing technology of requiring a user to manually configure the battery packs one by one, thereby avoiding the complicated and time-consuming configuration process and the resulting low configuration efficiency.

### Embodiment III

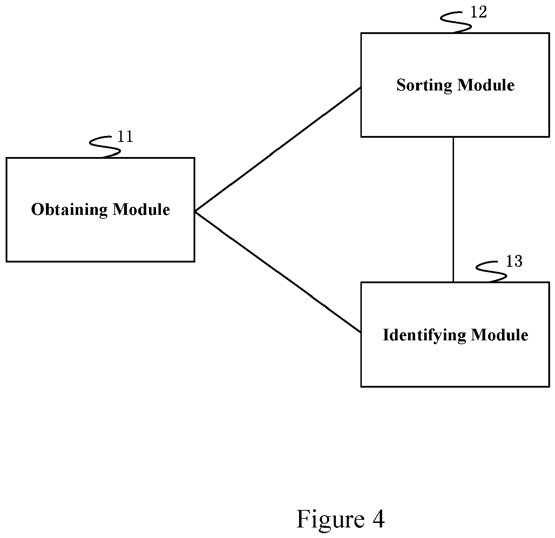

Figure 4 is a schematic view of the structure of a device configured to practice the method of the embodiment I for identifying a master battery pack and slave battery packs according to one or more embodiments of the present application. As shown in Figure 4, the device for identifying a master battery pack and slave battery packs in this embodiment may be included in the first battery pack. The device may include: an obtaining module 11, a sorting module 12 and an identifying module 13.

The obtaining module 11 is configured, after a first battery pack is connected to a battery cabinet, to obtain an identifier of the first battery pack, and to obtain the identifiers of other battery packs in the battery cabinet through a communication bus, where the number of the other battery packs is N, and N is a positive integer.

The sorting module 12 is configured to sort the identifier of the first battery pack and the identifier of each of the other battery packs obtained by the obtaining module 11 to generate a sorted result.

The identifying module 13 is configured, according to the sorted result generated by the sorting module 12, to identify a master battery pack and slave battery packs among the first battery pack and the other battery packs.

In one aspect, the identifier of the first battery pack and the identifier of each of a second battery pack is a unique address. In one aspect, the identifier of the first battery pack and the identifier of each of a second battery pack is a unique serial number.

In one aspect, the sorting module 12 is specifically configured to sort the identifiers according to an ascending order of the identifiers. In one aspect, the sorting module 12 is configured to sort the identifiers according to a descending order of the identifiers.

In one aspect, the identifying module 13 is specifically configured by the first battery pack, according to the sorted result, to identify the battery pack with the largest identifier as a master battery pack, and to identify each of the other battery packs as a slave battery pack. In one aspect, the identifying module 13 is configured by the first battery pack, according to the sorted result, to identify the battery pack with the smallest identifier as a master battery pack, and to identify each of the other battery packs as a slave battery pack.

In addition, the device for identifying a master battery pack and slave battery packs in one embodiment of the application may be included in a battery pack. The obtaining module 11 is further configured, after a battery pack is connected to the battery pack cabinet, to obtain the identifier of the first battery pack.

The identifying module 13 is configured, after a first battery pack is connected to the battery pack cabinet and if/when no identifier of any other battery pack is received through the communication bus, to identify the first battery pack itself as the master battery pack.

In one aspect, the identifier of the first battery pack and the identifier of each of the other battery packs is a unique address code. In one aspect, the identifier of the first battery pack and the identifier of each of the other battery packs is a unique serial number. The device in one embodiment of the present application may be configured to practice the technical solution of the method disclosed in the embodiment shown in Figure 1, and because the implementation mechanisms and technical effects are similar, the details of which will not be repeated herein.

### Embodiment IV

In the structure of the device shown in Figure 4, in one embodiment of the application, the obtaining module 11 is further configured, after detecting that the master battery pack is disconnected from the battery cabinet, and if/when within a specified time period a new second battery pack is connected to the battery cabinet, to obtain the identifier of the second battery pack, where i ranges from 1 to N, where N is a positive integer, and N is the total number of battery packs in the battery cabinet.

The sorting module 12 is further configured to sort the identifiers of the first battery packs and the identifier of the second battery packs to obtain a sorted result.

The identifying module 13 is further configured, according to the sorted result generated by the sorting module, to identify a master battery pack and slave battery packs among the first battery packs and the second battery pack.

In one aspect, the identifiers of each of the first battery packs and the identifier of the second battery pack is a unique address. In one aspect, the identifiers of each of the first battery packs and the identifier of the second battery pack is a unique serial number.

In one aspect, the identifying module 13 may be further configured, after detecting that the master battery pack is disconnected from the battery cabinet, and if/when no new second battery pack is connected to the battery cabinet within a specified time period, to identify a new master battery pack and new slave battery packs according to the last sorted result of the identifiers.

In one aspect, the identifying module 13 may be configured, according to the last sorted result, to select the battery pack with the largest identifier, excluding the removed master battery pack, as the new master battery pack and each of the other battery packs as a slave battery pack. In one aspect, the identifying module may be configured, according to the last sorted result, to select the battery pack with the smallest identifier, excluding the removed master battery pack, as the new master battery pack and each of the other battery packs as a slave battery pack.

The device in this embodiment may be configured to practice the technical solution of the method disclosed in the embodiment shown in Figure 3, and because the implementation mechanisms and technical effects are similar, the details of which will not be repeated herein.

Disclosed are several exemplary embodiments of the present invention, it should be understood that the disclosed systems, devices, and methods may be implemented in other manners or configurations. For example, the division of the systems, devices, and methods of the exemplary embodiments into the various functional blocks, components, and steps presented herein is merely one logical function division, and there may be other divisions in other embodiments. For example, multiple units, components, blocks, or steps may be combined or integrated into one another, or some of the units, components, blocks may be omitted or disabled, or some of the steps not executed. In addition, any one of the described mutual coupling, direct coupling, or communication link may be an indirect coupling or communication link connected through other interfaces, devices or units, and may be in implemented in electrical, mechanical or other forms.

Functional units described as separate components in one or more embodiments of the present application may be integrated into one processing unit, or may not be physically separate. Conversely, components displayed as one unit may or may not be located in one physical unit. A functional unit or an integrated unit may be implemented in hardware, software, or any combination of hardware and software.

It is understood to a person of ordinary skill in the art that all or part of the steps of the methods described in one or more embodiments of the application may be implemented in hardware configured to execute program instructions. The program instructions may be stored in a computer readable storage medium. When the program instructions are executed, the steps of the methods described in the embodiments may be performed. The computer readable storage medium may include various media capable of storing program codes, such as a ROM, a RAM, a magnetic disk, an optical disc, etc.

A method for identifying a master battery pack comprises:
obtaining, by a first battery pack, an identifier of the first battery pack after the first battery pack is connected to a battery cabinet; and
identifying, by the first battery pack, itself as the master battery pack when, after the first battery pack is connected to the battery cabinet, the first battery pack does not receive identifiers of one or more other battery packs through a communication bus.

The method preferably comprises:
receiving, by the first battery pack, identifiers of one or more other battery packs in their respective battery cabinets through the communication bus, wherein a number of the one or more other battery packs plus the first battery pack is N, wherein N is a positive integer;
sorting, by the first battery pack, the identifier of the first battery pack and the identifiers of the one or more other battery packs to obtain a sorted result; and identifying, by the first battery pack, the master battery pack and one or more slave battery packs among the first battery pack and the one or more other battery packs according to the sorted result.

Preferably, the master battery pack controls operations of the one or more slave battery packs.

Preferably, the identifier of the first battery pack and the identifiers of the one or more other battery packs are each a unique address, or
the identifier of the first battery pack and the identifiers of the one or more other battery packs are each a unique serial number.

Preferably, said sorting, by the first battery pack, the identifier of the first battery pack and the identifiers of each of the one or more other battery packs, comprises:
sorting, by the first battery pack, all of the identifiers according to an ascending order of all of the identifiers to obtain the sorted result; or
sorting, by the first battery pack, all of the identifiers according to a descending order of all of the identifiers to obtain the sorted result.

Preferably, said identifying, by the first battery pack, the master battery pack and the one or more slave battery packs among the first battery pack and the one or more other battery packs, comprises:
identifying, by the first battery pack, a battery pack with a largest identifier as the master battery pack, and other battery packs as the one or more slave battery packs according to the sorted result; or
identifying, by the first battery pack, a battery pack with a smallest identifier as the master battery pack, and other battery packs as the one or more slave battery packs according to the sorted result.

The method preferably further comprises:
detecting, by the first battery pack, that the master battery pack is removed from its battery cabinet;
detecting, by the first battery pack, that a new battery pack is not connected to any of the battery cabinets within a time period after the master battery pack is removed; and
identifying, by the first battery pack, a new master battery pack and new slave battery packs according to the sorted result.

Preferably, said identifying, by the first battery pack, the new master battery pack and the new slave battery packs according to the sorted result, comprises:
identifying, by the first battery pack, a battery pack with a largest identifier excluding the removed master battery pack as the new master battery pack, and other battery packs as the new slave battery packs according to the sorted result; or
identifying, by the first battery pack, a battery pack with a smallest identifier excluding the removed master battery pack as the new master battery pack, and other battery packs as the new slave battery packs according to the sorted result.

A method for identifying a new master battery pack and new slave battery packs, comprises:
detecting, by an ith one of a plurality of first battery packs, that a master battery pack is removed from a battery cabinet of the master battery pack, wherein i ranges from 1 to N, wherein N is a positive integer, wherein N is a total number of the first battery packs connected to their respective battery cabinets, and wherein the first battery packs have respective identifiers;
detecting, by the ith one of the first battery packs, that a new battery pack is connected to one of the battery cabinets within a time period after the master battery pack is removed;
obtaining, by the ith one of the first battery packs, an identifier of the new battery pack; sorting, by the ith one of the first battery packs, the identifiers of the first battery packs and the identifier of the new battery pack to obtain a sorted result; and
identifying, by the ith one of the first battery packs, the new master battery pack and the new slave battery packs among the first battery packs and the new battery pack according to the sorted result.

Preferably, the identifiers of the first battery packs and the identifier of the new battery pack are each a unique address, or the identifiers of the first battery packs and the identifier of the new battery pack are each a unique serial number.

Preferably, said identifying, by the ith one of the first battery packs, the new master battery pack and the new slave battery packs among the first battery packs and the new battery pack, comprises:
identifying, by the ith one of the first battery packs, a battery pack with a largest identifier as the new master battery pack, and other battery packs as the new slave battery packs according to the sorted result; or
identifying, by the ith one of the first battery packs, a battery pack with a smallest identifier as the new master battery pack, and other battery packs as the new slave battery packs according to the sorted result.

A device in a first battery pack comprises:
an obtaining module configured to obtain an identifier of the first battery pack after the first battery pack is connected to a battery cabinet; and
an identifying module configured to identify the first battery pack as a master battery pack when, after the first battery pack is connected to the battery cabinet, the first battery pack does not receive identifiers of one or more other battery packs through a communication bus.

Preferably, the obtaining module is further configured to receive identifiers of one or more other battery packs in their respective battery cabinets through the communication bus, wherein a number of the one or more other battery packs plus the first battery pack is N, wherein N is a positive integer, wherein the device further comprises a sorting module configured to sort the identifier of the first battery pack and the identifiers of the one or more other battery packs to obtain a sorted result, and wherein the identifying module is further configured to identify the master battery pack and one or more slave battery packs among the first battery pack and the one or more other battery packs according to the sorted result.

Preferably, the identifier of the first battery pack and the identifiers of the one or more other battery packs are each a unique address, or
the identifier of the first battery pack and the identifiers of the one or more other battery packs are each a unique serial number.

Preferably, the sorting module is further configured to
sort all of the identifiers according to an ascending order of all of the identifiers to obtain the sorted result, or to sort all of the identifiers according to a descending order of all of the identifiers to obtain the sorted result.

Preferably, the identifying module is further configured to identify a battery pack with a largest identifier as the master battery pack, and other battery packs as the one or more slave battery packs according to the sorted result, or to identify a battery pack with a smallest identifier as the master battery pack, and other battery packs as the one or more slave battery packs according to the sorted result.

Preferably, the identifying module is further configured to:
detect that the master battery pack is removed from its battery cabinet;
detect that a new battery pack is not connected to any of the battery cabinets within a time period after the master battery pack is removed; and
identify a new master battery pack and new slave battery packs according to the sorted result.

Preferably, the identifying module is further configured to:
identify a battery pack with a largest identifier excluding the removed master battery pack as the new master battery pack, and other battery packs as the new slave battery packs according to the sorted result, or
identify a battery pack with a smallest identifier excluding the removed master battery pack as the new master battery pack, and other battery packs as the new slave battery packs according to the sorted result.

Preferably, the identifying module is further configured to: detect that the master battery pack is removed from the battery cabinet of the master battery pack; detect that a new battery pack is connected to one of the battery cabinets within a time period after the master battery pack is removed; and obtain an identifier of the new battery pack, and wherein the sorting module is further configured to sort all of the identifiers including the identifier of the new battery pack to obtain a sorted result, and wherein the identifying module is further configured to identify a new master battery pack and new slave battery packs among all of the battery packs including the new battery pack according to the sorted result.

Preferably, the identifiers of all of the battery packs including the identifier of the new battery pack are each a unique address, or the identifiers of all of the battery packs including the identifier of the new battery pack are each a unique serial number.

Finally, it is understood that the foregoing embodiments are presented to facilitate an understanding of the technical solutions of the present application, and are not intended to limit the present application. While the present application is described in detail with reference to the foregoing embodiments, it is understood by a person of ordinary skill in the art that modifications or changes to the foregoing embodiments may be made to part or all of the technical features without departing from the principle and scope of the disclosure of the present application.

## Claims

1. A method for identifying a new master battery pack, comprising:
detecting, by a first battery pack, that a master battery pack is removed from a battery cabinet of a power cabinet;
detecting, by the first battery pack, that a new battery pack is not connected to the battery cabinet within a time period after the master battery pack is removed, wherein the time period indicates a longest time that the power cabinet continues to operate in its current configuration after the master battery pack is removed; and
identifying, by the first battery pack, the new master battery pack and new slave battery packs according to a sorted result of battery pack identifiers when the new battery pack is not connected to the battery cabinet within the time period.

2. The method according to claim 1, further comprising:
obtaining, by the first battery pack, an identifier of the first battery pack after the first battery pack is connected to its battery cabinet of the power cabinet; and
identifying, by the first battery pack, itself as the new master battery pack when, after the first battery pack is connected to its battery cabinet, the first battery pack does not receive identifiers of one or more other battery packs.

3. The method according to claim 1, wherein the detecting, by the first battery pack, that the master battery pack is removed from the battery cabinet of the power cabinet comprises:
detecting, by the first battery pack, that the master battery pack is removed from the battery cabinet of the power cabinet based on a broadcast message sent by the master battery pack through a communication bus.

4. The method according to claim 1, further comprising:
obtaining, by the first battery pack, identifiers of one or more other battery packs in their respective battery cabinets of the power cabinet through a communication bus, wherein a number of the one or more other battery packs plus the first battery pack is N, wherein N is a positive integer;
sorting, by the first battery pack, the identifier of the first battery pack and the identifiers of the one or more other battery packs to obtain the sorted result of battery pack identifiers;
identifying, by the first battery pack, the new master battery pack and the new slave battery packs among the first battery pack and the one or more other battery packs according to the sorted result of battery pack identifiers.

5. The method according claim 4, wherein said sorting, by the first battery pack, the identifier of the first battery pack and the identifiers of each of the one or more other battery packs, comprises:
sorting, by the first battery pack, all of the identifiers according to an ascending order of all of the identifiers to obtain the sorted result of battery pack identifiers; or
sorting, by the first battery pack, all of the identifiers according to a descending order of all of the identifiers to obtain the sorted result of battery pack identifiers.

6. The method according to any of claims 4 or 5, wherein said identifying, by the first battery pack, the new master battery pack and the new slave battery packs among the first battery pack and the one or more other battery packs, comprises:
identifying, by the first battery pack, a battery pack with a largest identifier as the new master battery pack, and other battery packs as the new slave battery packs according to the sorted result of battery pack identifiers; or
identifying, by the first battery pack, a battery pack with a smallest identifier as the new master battery pack, and other battery packs as the new slave battery packs according to the sorted result of battery pack identifiers.

7. The method according to any of claims 1 or 4 or 5, wherein said identifying, by the first battery pack, the new master battery pack and the new slave battery packs according to the sorted result of battery pack identifiers, comprises:
identifying, by the first battery pack, a battery pack with a largest identifier excluding the removed master battery pack as the new master battery pack, and other battery packs as the new slave battery packs according to the sorted result of battery pack identifiers; or
identifying, by the first battery pack, a battery pack with a smallest identifier excluding the removed master battery pack as the new master battery pack, and other battery packs as the new slave battery packs according to the sorted result of battery pack identifiers.

8. A first battery pack comprising a device, the device comprising: an identifying module (13) configured to:
detect that a master battery pack is removed from a battery cabinet of a power cabinet;
detect that a new battery pack is not connected to the battery cabinet within a time period after the master battery pack is removed, wherein the time period indicates a longest time that the power cabinet continues to operate in its current configuration after the master battery pack is removed; and
identify a new master battery pack and new slave battery packs according to a sorted result of battery pack identifiers when the new battery pack is not connected to the battery cabinet within the time period.

9. The first battery pack comprising the device according to claim 8, further comprising:
an obtaining module (11) configured to obtain an identifier of the first battery pack after the first battery pack is connected to its battery cabinet of the power cabinet; and
wherein the identifying module (13) is further configured to identify the first battery pack as the new master battery pack when, after the first battery pack is connected to its battery cabinet, the first battery pack does not receive identifiers of one or more other battery packs.

10. The first battery pack comprising the device according to claim 8, wherein the identifying module (13) is further
configured to detect that the master battery pack is removed from the battery cabinet of the power cabinet based on a broadcast message sent by the master battery pack through a communication bus.

11. The first battery pack comprising the device according to claim 8, further comprising:
an obtaining module (11) configured to obtain identifiers of one or more other battery packs in their respective battery cabinets of the power cabinet through a communication bus, wherein a number of the one or more other battery packs plus the first battery pack is N, wherein N is a positive integer; and
a sorting module (12) configured to sort the identifier of the first battery pack and the identifiers of the one or more other battery packs to obtain the sorted result of battery pack identifiers;
wherein the identifying module (13) is further configured to identify the new master battery pack and the new slave battery packs among the first battery pack and the one or more other battery packs according to the sorted result of battery pack identifiers.

12. The first battery pack comprising the device according to claim 11, wherein the sorting module (12) is further configured
to sort all of the identifiers according to an ascending order of all of the identifiers to obtain the sorted result of battery pack identifiers, or to sort all of the identifiers according to a descending order of all of the identifiers to obtain the sorted result of battery pack identifiers.

13. The first battery pack comprising the device according to any of claims 11 or 12, wherein the identifying module (13) is
further configured to identify a battery pack with a largest identifier as the new master battery pack, and other battery packs as the new slave battery packs according to the sorted result of battery pack identifiers, or to identify a battery pack with a smallest identifier as the new master battery pack, and other battery packs as the new slave battery packs according to the sorted result of battery pack identifiers.

14. The first battery pack comprising the device according to any of claims 11 to 13,
wherein the identifying module (13) is further configured to detect that the new master battery pack is removed from the battery cabinet of the new master battery pack, detect that another new battery pack is connected to one of the battery cabinets within the time period after the new master battery pack is removed, and obtain an identifier of the another new battery pack,
wherein the sorting module (12) is further configured to sort all of the identifiers including the identifier of the another new battery pack to obtain another sorted result of battery pack identifiers, and
wherein the identifying module (13) is further configured to identify another new master battery pack and other new slave battery packs among all of the battery packs including the another new battery pack according to the another sorted result of battery pack identifiers.

## Patentansprüche

1. Verfahren zum Identifizieren eines neuen Master-Batteriepacks, aufweisend:
Erfassen, durch einen ersten Batteriepack, dass ein Master-Batteriepack aus einem Batterieschrank eines Leistungsschranks entfernt wird;
Erfassen, durch den ersten Batteriepack, dass ein neuer Batteriepack nicht mit dem Batterieschrank innerhalb eines Zeitraums verbunden wird, nachdem der Master-Batteriepack entfernt wurde, wobei der Zeitraum eine längste Zeit angibt, während der der Leistungsschrank weiterhin in seiner aktuellen Konfiguration arbeitet, nachdem der Master-Batteriepacks entfernt wurde; und
Identifizieren, durch den ersten Batteriepack, des neuen Master-Batteriepacks und neuer Slave-Batteriepacks gemäß einem sortierten Ergebnis von Batteriepack-Kennungen, wenn der neue Batteriepack nicht innerhalb der Zeitspanne mit dem Batterieschrank verbunden wird.

2. Verfahren nach Anspruch 1, weiterhin aufweisend:
Erhalten, durch den ersten Batteriepack, einer Kennung des ersten Batteriepacks, nachdem der erste Batteriepack mit seinem Batterieschrank des Leistungsschranks verbunden ist; und
Identifizieren, durch den ersten Batteriepack, sich selbst als das neue Master-Batteriepack, wenn, nachdem der erste Batteriepack mit seinem Batterieschrank verbunden ist, der erste Batteriepack keine Kennungen von einem oder mehreren anderen Batteriepacks empfängt.

3. Verfahren nach Anspruch 1, wobei das Erfassen, durch den ersten Batteriepack, dass der Master-Batteriepack aus dem Batterieschrank des Leistungsschranks entfernt wurde, Folgendes aufweist:
Erfassen, durch den ersten Batteriepack, dass der Master-Batteriepack aus dem Batterieschrank des Leistungsschranks entfernt wurde basierend auf einer Broadcast-Nachricht, die von dem Master-Batteriepack über einen Kommunikationsbus gesendet wird.

4. Verfahren nach Anspruch 1, weiterhin aufweisend:
Erhalten, durch den ersten Batteriepack, von Kennungen eines oder mehrerer anderer Batteriepacks in ihren jeweiligen Batterieschränken des Leistungsschranks über einen Kommunikationsbus, wobei eine Anzahl des einen oder der mehreren anderen Batteriepacks plus des ersten Batteriepacks N ist, wobei N eine positive ganze Zahl ist;
Sortieren, durch den ersten Batteriepack, der Kennung des ersten Batteriepacks und der Kennungen des einen oder der mehreren anderen Batteriepacks, um das sortierte Ergebnis von Batteriepack-Kennungen zu erhalten;
Identifizieren, durch den ersten Batteriepack, des neuen Master-Batteriepacks und der neuen Slave-Batteriepacks unter dem ersten Batteriepack und dem einen oder den mehreren anderen Batteriepacks gemäß dem sortierten Ergebnis der Batteriepack-Kennungen.

5. Verfahren nach Anspruch 4, wobei das Sortieren, durch den ersten Batteriepack, der Kennung des ersten Batteriepacks und der Kennungen von jedem des einen oder der mehreren anderen Batteriepacks aufweist:
Sortieren, durch den ersten Batteriepack, aller Kennungen gemäß einer aufsteigenden Reihenfolge aller Kennungen, um das sortierte Ergebnis von Batteriepack-Kennungen zu erhalten; oder
Sortieren, durch den ersten Batteriepack, aller Kennungen gemäß einer absteigenden Reihenfolge aller Kennungen, um das sortierte Ergebnis von Batteriepack-Kennungen zu erhalten.

6. Verfahren nach einem der Ansprüche 4 oder 5, wobei das Identifizieren, durch den ersten Batteriepack, des neuen Master-Batteriepacks und der neuen Slave-Batteriepacks unter dem ersten Batteriepack und dem einen oder den mehreren anderen Batteriepacks aufweist:
Identifizieren, durch den ersten Batteriepack, eines Batteriepacks mit einer größten Kennung als den neuen Master-Batteriepack, und andere Batteriepacks als die neuen Slave-Batteriepacks gemäß dem sortierten Ergebnis von Batteriepack-Kennungen; oder
Identifizieren, durch den ersten Batteriepack, eines Batteriepacks mit einer kleinsten Kennung als den neuen Master-Batteriepack, und andere Batteriepacks als die neuen Slave-Batteriepacks gemäß dem sortierten Ergebnis von Batteriepack-Kennungen.

7. Verfahren nach einem der Ansprüche 1 oder 4 oder 5, wobei das Identifizieren, durch den ersten Batteriepack, des neuen Master-Batteriepacks und der neuen Slave-Batteriepacks gemäß dem sortierten Ergebnis von Batteriepack-Kennungen aufweist:
Identifizieren, durch den ersten Batteriepack, eines Batteriepacks mit einer größten Kennung, ausschließlich des entfernten Master-Batteriepacks, als den neue Master-Batteriepack und anderer Batteriepacks als die neuen Slave-Batteriepacks gemäß dem sortierten Ergebnis von Batteriepack-Kennungen; oder
Identifizieren, durch den ersten Batteriepack, eines Batteriepacks mit einer kleinsten Kennung, ausschließlich des entfernten Master-Batteriepacks, als den neuen Master-Batteriepack und anderer Batteriepacks als die neuen Slave-Batteriepacks gemäß dem sortierten Ergebnis von Batteriepack-Kennungen.

8. Erster Batteriepack, aufweisend eine Vorrichtung, wobei die Vorrichtung aufweist:
ein Identifizierungsmodul (13), das konfiguriert ist zum:
Erfassen, dass ein Master-Batteriepack aus einem Batterieschrank eines Leistungsschranks entfernt wird;
Erfassen, dass ein neuer Batteriepack nicht mit dem Batterieschrank innerhalb eines Zeitraums verbunden wird, nachdem der Master-Batteriepack entfernt wurde, wobei der Zeitraum eine längste Zeit angibt, während der der Leistungsschrank weiterhin in seiner aktuellen Konfiguration arbeitet, nachdem der Master-Batteriepacks entfernt wurde; und
Identifizieren eines neuen Master-Batteriepacks und neuer Slave-Batteriepacks gemäß einem sortierten Ergebnis von Batteriepack-Kennungen, wenn der neue Batteriepack nicht innerhalb der Zeitspanne mit dem Batterieschrank verbunden wird.

9. Erster Batteriepack aufweisend die Vorrichtung nach Anspruch 8, weiterhin aufweisend:
ein Erlangungsmodul (11), das dazu konfiguriert ist, eine Kennung des ersten Batteriepacks zu erhalten, nachdem der erste Batteriepack mit seinem Batterieschrank des Leistungsschranks verbunden ist; und
wobei das Identifizierungsmodul (13) weiterhin dazu konfiguriert ist, den ersten Batteriepack als den neuen Master-Batteriepack zu identifizieren, wenn, nachdem der erste Batteriepack mit seinem Batterieschrank verbunden ist, der erste Batteriepack keine Kennungen von einem oder mehreren anderen Batteriepacks empfängt.

10. Erster Batteriepack aufweisend die Vorrichtung nach Anspruch 8, wobei das Identifizierungsmodul (13) weiterhin so konfiguriert ist, dass es erkennt, dass der Master-Batteriepack aus dem Batterieschrank des Leistungsschranks entfernt wurde, basierend auf einer Broadcast-Nachricht, die die von dem Master-Batteriepack über einen Kommunikationsbus gesendet wurde.

11. Erster Batteriepack aufweisend die Vorrichtung nach Anspruch 8, weiterhin aufweisend:
ein Erlangungsmodul (11), das konfiguriert ist zum Erhalten von Kennungen eines oder mehrerer anderer Batteriepacks in ihren jeweiligen Batterieschränken des Leistungsschranks über einen Kommunikationsbus, wobei eine Anzahl des einen oder der mehreren anderen Batteriepacks plus des ersten Batteriepacks N ist, wobei N eine positive ganze Zahl ist; und
ein Sortiermodul (12), das konfiguriert ist zum Sortieren der Kennung des ersten Batteriepacks und der Kennungen des einen oder der mehreren anderen Batteriepacks, um das sortierte Ergebnis von Batteriepack-Kennungen zu erhalten;
wobei das Identifizierungsmodul (13) weiterhin konfiguriert ist zum Identifizieren des neuen Master-Batteriepacks und der neuen Slave-Batteriepacks unter dem ersten Batteriepack und dem einen oder den mehreren anderen Batteriepacks gemäß dem sortierten Ergebnis der Batteriepack-Kennungen.

12. Erster Batteriepack aufweisend die Vorrichtung nach Anspruch 11, wobei das Sortiermodul (12) weiterhin konfiguriert ist zum Sortieren aller Kennungen gemäß einer aufsteigenden Reihenfolge aller Kennungen, um das sortierte Ergebnis von Batteriepack-Kennungen zu erhalten; oder zum Sortieren aller Kennungen gemäß einer absteigenden Reihenfolge aller Kennungen, um das sortierte Ergebnis von Batteriepack-Kennungen zu erhalten.

13. Erster Batteriepack aufweisend die Vorrichtung nach einem der Ansprüche 11 oder 12, wobei das Identifizierungsmodul (13) weiterhin konfiguriert ist zum Identifizieren eines Batteriepacks mit einer größten Kennung als den neuen Master-Batteriepack, und andere Batteriepacks als die neuen Slave-Batteriepacks gemäß dem sortierten Ergebnis von Batteriepack-Kennungen; oder zum Identifizieren eines Batteriepacks mit einer kleinsten Kennung als den neuen Master-Batteriepack, und andere Batteriepacks als die neuen Slave-Batteriepacks gemäß dem sortierten Ergebnis von Batteriepack-Kennungen.

14. Erster Batteriepack aufweisend die Vorrichtung nach einem der Ansprüche 11 bis 13,
wobei das Identifizierungsmodul (13) weiterhin konfiguriert ist zum Erfassen, dass der neue Master-Batteriepack aus dem Batterieschrank des neuen Master-Batteriepacks entfernt wird, zum Erfassen, dass ein anderer neuer Batteriepack mit einem der Batterieschränke innerhalb der Zeitdauer verbunden wird, nachdem der neue Master-Batteriepack entfernt wird, und zum Erlangen einer Kennung des anderen neuen Batteriepacks,
wobei das Sortiermodul (12) weiterhin konfiguriert ist, dass es alle Kennungen einschließlich der Kennung des anderen neuen Batteriepacks sortiert, um ein anderes sortiertes Ergebnis von Batteriepack-Kennungen zu erhalten, und
wobei das Identifizierungsmodul (13) weiterhin konfiguriert ist zum Identifizieren eines anderen neuen Master-Batteriepacks und anderer neuer Slave-Batteriepacks unter allen Batteriepacks einschließlich des andern neuen Batteriepacks, gemäß dem anderen sortierten Ergebnis von Batteriepack-Kennungen.

## Revendications

1. - Procédé d'identification d'un nouveau bloc-batterie maître, comprenant :
détecter, par un premier bloc-batterie, qu'un bloc-batterie maître est retiré d'une armoire de batteries d'une armoire de puissance ;
détecter, par le premier bloc-batterie, qu'un nouveau bloc-batterie n'est pas connecté à l'armoire de batteries dans une période de temps après que le bloc-batterie maître a été retiré, la période de temps indiquant la durée la plus longue pendant laquelle l'armoire de puissance continue à fonctionner dans sa configuration actuelle après que le bloc-batterie maître a été retiré ; et
identifier, par le premier bloc-batterie, le nouveau bloc-batterie maître et des nouveaux blocs-batteries esclaves conformément à un résultat trié d'identifiants de bloc-batterie lorsque le nouveau bloc-batterie n'est pas connecté à l'armoire de batteries dans la période de temps.

2. - Procédé selon la revendication 1, comprenant en outre :
obtenir, par le premier bloc-batterie, un identifiant du premier bloc-batterie après que le premier bloc-batterie a été connecté à son armoire de batterie de l'armoire de puissance ; et
identifier, par le premier bloc-batterie, lui-même en tant que nouveau bloc-batterie maître lorsque, après que le premier bloc-batterie a été connecté à son armoire de batteries, le premier bloc-batterie ne reçoit pas d'identifiants d'un ou plusieurs autres blocs-batteries.

3. - Procédé selon la revendication 1, dans lequel la détection, par le premier bloc-batterie, que le bloc-batterie maître est retiré de l'armoire de batteries de l'armoire de puissance comprend :
détecter, par le premier bloc-batterie, que le bloc-batterie maître est retiré de l'armoire de batteries de l'armoire de puissance sur la base d'un message de diffusion envoyé par le bloc-batterie maître par l'intermédiaire d'un bus de communication.

4. - Procédé selon la revendication 1, comprenant en outre :
obtenir, par le premier bloc-batterie, des identifiants d'un ou plusieurs autres blocs-batteries dans leurs armoires de batteries respectives de l'armoire de puissance par l'intermédiaire d'un bus de communication, un nombre du ou des autres blocs-batteries plus le premier bloc-batterie étant N, N étant un nombre entier positif ;
trier, par le premier bloc-batterie, l'identifiant du premier bloc-batterie et les identifiants du ou des autres blocs-batteries pour obtenir le résultat trié d'identifiants de bloc-batterie ;
identifier, par le premier bloc-batterie, le nouveau bloc-batterie maître et les nouveaux blocs-batteries esclaves parmi le premier bloc-batterie et le ou les autres blocs-batteries conformément au résultat trié d'identifiants de bloc-batterie.

5. - Procédé selon la revendication 4, dans lequel ledit tri, par le premier bloc-batterie, de l'identifiant du premier bloc-batterie et des identifiants de chacun du ou des autres blocs-batteries, comprend :
trier, par le premier bloc-batterie, tous les identifiants selon un ordre croissant de tous les identifiants pour obtenir le résultat trié d'identifiants de bloc-batterie ; ou
trier, par le premier bloc-batterie, tous les identifiants selon un ordre décroissant de tous les identifiants pour obtenir le résultat trié d'identifiants de bloc-batterie.

6. - Procédé selon l'une quelconque des revendications 4 ou 5, dans lequel ladite identification, par le premier bloc-batterie, du nouveau bloc-batterie maître et des nouveaux blocs-batteries esclaves parmi le premier bloc-batterie et le ou les autres blocs-batteries, comprend :
identifier, par le premier bloc-batterie, un bloc-batterie ayant l'identifiant le plus grand comme nouveau bloc-batterie maître, et d'autres blocs-batteries comme nouveaux blocs-batteries esclaves conformément au résultat trié d'identifiants de bloc-batterie ; ou
identifier, par le premier bloc-batterie, un bloc-batterie avec l'identifiant le plus petit comme nouveau bloc-batterie maître, et d'autres blocs-batteries comme nouveaux blocs-batteries esclaves conformément au résultat trié d'identifiants de bloc-batterie.

7. - Procédé selon l'une quelconque des revendications 1 ou 4 ou 5, dans lequel ladite identification, par le premier bloc-batterie, du nouveau bloc-batterie maître et des nouveaux blocs-batteries esclaves conformément au résultat trié d'identifiants de bloc-batterie, comprend :
identifier, par le premier bloc-batterie, un bloc-batterie avec l'identifiant le plus grand, hors bloc-batterie maître retiré, comme nouveau bloc-batterie maître, et d'autres blocs-batteries comme nouveaux blocs-batteries esclaves conformément au résultat trié d'identifiants de bloc-batterie ; ou
identifier, par le premier bloc-batterie, un bloc-batterie avec l'identifiant le plus petit, hors bloc-batterie maître retiré, comme nouveau bloc-batterie maître, et d'autres blocs-batteries comme nouveaux blocs-batteries esclaves conformément au résultat trié d'identifiants de bloc-batterie.

8. - Premier bloc-batterie comprenant un dispositif, le dispositif comprenant :
un module d'identification (13) configuré pour :
détecter qu'un bloc-batterie maître est retiré d'une armoire de batteries d'une armoire de puissance ;
détecter qu'un nouveau bloc-batterie n'est pas connecté à l'armoire de batteries dans une période de temps après que le bloc-batterie maître a été retiré, la période de temps indiquant la durée la plus longue pendant laquelle l'armoire de puissance continue à fonctionner dans sa configuration actuelle après que le bloc-batterie maître a été retiré ; et
identifier un nouveau bloc-batterie maître et de nouveaux blocs-batteries esclaves conformément à un résultat trié d'identifiants de bloc-batterie lorsque le nouveau bloc-batterie n'est pas connecté à l'armoire de batteries pendant la période de temps.

9. - Premier bloc-batterie comprenant le dispositif selon la revendication 8, comprenant en outre :
un module d'obtention (11) configuré pour obtenir un identifiant du premier bloc-batterie après que le premier bloc-batterie a été connecté à son armoire de batteries de l'armoire de puissance ; et
le module d'identification (13) étant en outre configuré pour identifier le premier bloc-batterie comme nouveau bloc-batterie maître lorsque, après que le premier bloc-batterie a été connecté à son armoire de batteries, le premier bloc-batterie ne reçoit pas d'identifiants d'un ou plusieurs autres blocs-batteries.

10. - Premier bloc-batterie comprenant le dispositif selon la revendication 8, dans lequel le module d'identification (13) est en outre configuré pour détecter que le bloc-batterie maître est retiré de l'armoire de batteries de l'armoire de puissance sur la base d'un message de diffusion envoyé par le bloc-batterie maître par l'intermédiaire d'un bus de communication.

11. - Premier bloc-batterie comprenant le dispositif selon la revendication 8, comprenant en outre :
un module d'obtention (11) configuré pour obtenir des identifiants d'un ou plusieurs autres blocs-batteries dans leurs armoires de batteries respectives de l'armoire de puissance par l'intermédiaire d'un bus de communication, un nombre du ou des autres blocs-batteries plus le premier bloc-batterie étant N, N étant un nombre entier positif ; et
un module de tri (12) configuré pour trier l'identifiant du premier bloc-batterie et les identifiants du ou des autres blocs-batteries pour obtenir le résultat trié d'identifiants de bloc-batterie ;
le module d'identification (13) étant en outre configuré pour identifier le nouveau bloc-batterie maître et les nouveaux blocs-batteries esclaves parmi le premier bloc-batterie et le ou les autres blocs-batteries conformément au résultat trié d'identifiants de bloc-batterie.

12. - Premier bloc-batterie comprenant le dispositif selon la revendication 11, dans lequel le module de tri (12) est en outre configuré pour trier tous les identifiants selon un ordre croissant de tous les identifiants pour obtenir le résultat trié d'identifiants de bloc-batterie, ou pour trier tous les identifiants selon un ordre décroissant de tous les identifiants pour obtenir le résultat trié d'identifiants de bloc-batterie.

13. - Premier bloc-batterie comprenant le dispositif selon l'une quelconque des revendications 11 ou 12, dans lequel le module d'identification (13) est en outre configuré pour identifier un bloc-batterie avec l'identifiant le plus grand comme nouveau bloc-batterie maître, et d'autres blocs-batteries comme nouveaux blocs-batteries esclaves conformément au résultat trié d'identifiants de bloc-batterie, ou pour identifier un bloc-batterie avec l'identifiant le plus petit comme nouveau bloc-batterie maître, et d'autres blocs-batteries comme nouveaux blocs-batteries esclaves conformément au résultat trié d'identifiants de bloc-batterie.

14. - Premier bloc-batterie comprenant le dispositif selon l'une quelconque des revendications 11 à 13,
dans lequel le module d'identification (13) est en outre configuré pour détecter que le nouveau bloc-batterie maître est retiré de l'armoire de batteries du nouveau bloc-batterie maître, détecter qu'un autre nouveau bloc-batterie est connecté à l'une des armoires de batteries dans la période de temps après que le nouveau bloc-batterie maître a été retiré, et obtenir un identifiant de l'autre nouveau bloc-batterie,
dans lequel le module de tri (12) est en outre configuré pour trier tous les identifiants, y compris l'identifiant de l'autre nouveau bloc-batterie, pour obtenir un autre résultat trié d'identifiants de bloc-batterie, et
dans lequel le module d'identification (13) est en outre configuré pour identifier un autre nouveau bloc-batterie maître et d'autres nouveaux blocs-batteries esclaves parmi tous les blocs-batteries, y compris l'autre nouveau bloc-batterie, conformément à l'autre résultat trié d'identifiants de bloc-batterie.
